Europäisches Patentamt

European Patent Office

Office européen des brevets

(19)

(11) EP 1 204 116 A1

(12) EUROPEAN PATENT APPLICATION

(43) Date of publication:
08.05.2002 Bulletin 2002/19

(51) Int Cl.⁷: **G11B 33/10**, G11B 23/40, G11B 17/04

(21) Application number: 00403061.5

(22) Date of filing: 03.11.2000

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Thomson Licensing S.A.**
**92100 Boulogne-Billancourt (FR)**

(72) Inventor: **Woo, Jisung**
**Shatin, N.T., Hong-Kong (CI)**

(74) Representative: **Bonnans, Arnaud et al**
**Thomson multimedia**
**European Patent Operations**
**46, quai Alphonse Le Gallo**
**92648 Boulogne Cedex (FR)**

(54) **Disc player, for instance a CD player**

(57)    A disc player (2) comprises means for rotating a disc (10) with a first instantaneous period and a stroboscope light source (14) able to illuminate at least partly a surface of the disc (10), for instance below a window (8) of a cover (4), with a second instantaneous period.

The second instantaneous period can be made different from an integer times the first instantaneous period.

FIG.1

Printed by Jouve, 75001 PARIS (FR)

**Description**

The invention relates to a disc player, for instance a CD player.

In order to read the various tracks of a disc, the player conventionally comprises rotating means for the disc, at a speed of more than 60 rpm. This basic compulsory feature has the inherent drawback that, under normal (*i.e.* constant) lighting conditions, it is not possible for the human eye to view the surface of the disc, for instance a drawing on the disc itself or a label with information, directly or through a transparent cover.

To avoid this drawback, it has been proposed as described in EP 0 177 107 A1 to illuminate the surface of the disc with a stroboscope which period equals the rotation period of the rotating means. The disc is thus illuminated at the same position on each rotation which makes it possible for the human eye to view the words, symbols or drawings on the surface of the disc as the disc looks immobile.

Countrarily to these teachings, the invention proposes to allow the disc to be viewed in various positions, for instance to make it easier to be read by the user or to make it possible to have access to the whole surface of the disc through a window not covering the whole surface of the disc.

In this goal, the invention proposes a disc player comprising means for rotating a disc with a first instantaneous period, a stroboscope light source able to illuminate at least partly a surface of the disc with a second instantaneous period and means allowing the second instantaneous period to be different from an integer times the first instantaneous period.

According to preferred features :

- the stroboscope light source is fixed on a pressure arm ;
- the pressure arm defines at least a reflection shape in front of said stroboscope light source;
- the difference between the second instantaneous period and an integer times the first instantaneous period is proportional to the square of the first instantaneous period ;
- the second instantaneous period is constantly different from an integer times the first instantaneous period ;
- the second instantaneous period is different from an integer times the first instantaneous period when a control key is pressed ;
- the second instantaneous period is periodically different from an integer times the first instantaneous period for a given lapse of time ;
- a transparent window covers only a part of a cover of the disc player.

The invention and other features thereof will be understood in the light of the following description made with reference to the attached drawings
where :

- figure 1 represents a top view of a first embodiment of a disc player according to the invention ;
- figure 2 represents a perspective view of some of the elements of the disc player of figure 1 ;
- figure 3 represents a top view of a second embodiment of a disc player according to the invention ;
- figure 4 represents some of the electronic circuits of the disc player of figure 3.

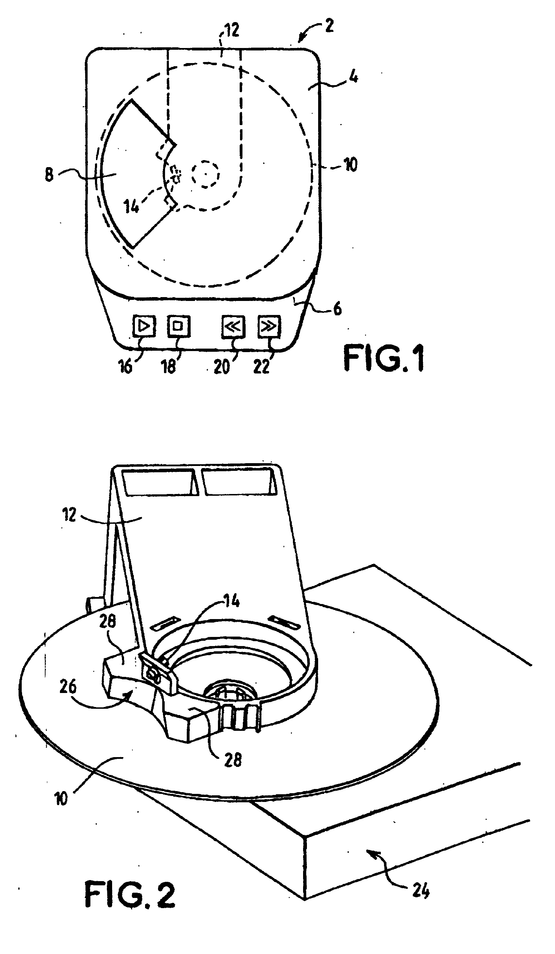

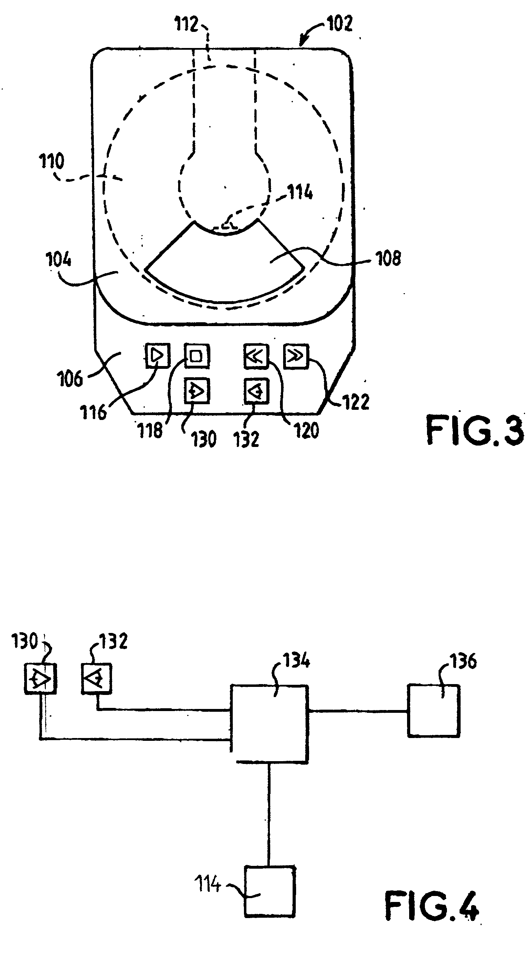

A compact disc (CD) player 2 is represented at figure 1. The player 2 comprises a deck 6 and a movable cover 4. When in its raised position, the cover 4 allows to put a disc 10 on a reading unit 24 (see figure 2) mounted in the deck 6. The reading unit comprises a turntable and an optical pick-up to read information from the disc 10. When in its closed position, the cover 4 covers the whole surface of the disc 10.

The cover 4 comprises a transparent window 8 covering only a part of the surface of the cover 4. When a disc 10 lies on the reading unit 24, a part of its upper surface carrying a label can thus be seen through the window 8.

The player 2 comprises control keys : a "play" key 16, a "stop" key 18, a "previous track" key 20 and a "next track" key 22.

On figure 2, some elements of the player 2 are represented : a pressure arm 12 which is attached to the cover 4 allows to press the disc 10 against the turntable of the reading unit 24. The outside periphery of the pressure arm 12 defines two protrusions 28 above the disc 10. A stroboscope light source 14 is fixed on the pressure arm 12 and located between the two protrusions 28.

The two protrusions 28 define between them a shape 26 for reflecting at least part of the light it receives from the stroboscope light source 14 to the surface of the disc 10. The shape 26 can for instance be part of a paraboloid which focus is located on the stroboscope light source 14 and which axis is directed towards the disc 10.

The turntable drives the disc 10 into rotation with a first instantaneous period $T_1$ which is monitored by the servo-control of the player 2. The linear velocity of the disc 10 is substantially constant (between 1.2 and 1.4 m/s). The rotational instantaneous period $T_1$ thus varies between about 30 ms and about 300 ms depending on the position of the track which is read on the disc.

The stroboscope light source 14 is lit with a second instantaneous period $T_2$ which is determined as a function of the first instantaneous period $T_1$ according to the formula :

$$T_2 = n \cdot [T_1 + \Phi \cdot T_1^2/(2\pi)],$$

where

n = 3 when $T_1$ is below 100 ms,
n = 1 when $T_1$ is above 100 ms.

In this way, the disc 10 is illuminated every n rotations of the disc, each time $n.\Phi.T_1^2/(2\pi)$ seconds later. As the rotational speed of the disc is $2\pi/T_1$, each time the light is lit, the position of the disc will have changed by $n.\Phi.T_1$. As the light is lit about $n.T_1$ times a second ($\Phi.T_1^2/(2\pi)$ is very small compared to T,), the position of the disc when illuminated varies by about $\Phi$ rad/s. This means that the parameter $\Phi$ in the above equation represents the apparent rotation of disc. $\Phi$ has a non-null fixed value. For instance, $\Phi = 0.15$ rad/s can be used. The disc thus seems to rotate slowly, realising an apparent rotation ($2\pi$ rad) in about 20 seconds.

It is to be noted that the use of the parameter n allows to keep the stroboscope light frequency between about 3 Hz and 10 Hz. These values are sufficient to have an impression of smooth apparent rotation of the disc and at the same time they remain below the limit of retinal persistency (about 30 Hz).

The above calculation can be implemented in a micro-processor of the player 2, receiving the value for $T_1$ from the servo-control and controlling the stroboscope light source 14 accordingly.

Thanks to this solution, the whole surface of the disc 10 can be read though the window 8 only covers a part of the cover 4.

According to a possible variation, the value of $\Phi$ (or more generally the difference between $T_2$ and $T_1$) can be controlled by the user, for instance through appropriate control keys. According to this variation, $\Phi$ can for instance be variable between 0 rad/s (where the disc looks immobile) and a strictly positive upper limit, for instance 0.5 rad/s. It could also be variable between a strictly negative lower limit (*e.g.* - 0.3 rad/s) and a positive upper limit (*e.g.* 0.3 rad/s).

Another embodiment of the invention is represented at figures 3 and 4. Reference 102 is a disc (CD) player comprising a deck 106 and a cover 104 with a transparent window 108. A pressure arm 112 carries a stroboscope light source 114 in the vicinity of the part of the deck 106 receiving the disc. The stroboscope light source 114 thus illuminates the upper surface of the disc situated below the window 108.

The deck carries control keys : a "play" key 116, a "stop" key 118, a "fast backward" key 120, a "fast forward" key 122, a "look left" key 130 and a "look right" key 132.

The use of the "look left" key 130 and of the "look right" key 132 will now be explained with reference to figure 4.

A micro-processor 134 of the player 102 receives information about the rotational period $T_1$ of the disc from the servo-control unit 136. Depending on this information and on actions from the user on the the "look left" and "look right" control keys 130, 132, the micro-processor 134 will control the stroboscope light source 114 with the period $T_2$ given according to the below table.

| "Look left" key | "Look right" key | $T_2$ |
|---|---|---|
| Released | Released | $T_1$ |
| Pressed | Pressed | |
| Pressed | Released | $T_1 - \Phi.T_1^2/(2\pi)$ |
| Released | Pressed | $T_1 + \Phi.T_1^2/(2\pi)$ |

In this way, when none (or both, which should not happen theoretically) of the "look left" and "look right" keys is (are) pressed, the stroboscope light source 114 is lit at the same frequency as the disc rotates : the disc consequently looks immobile.

When the "look left" key 130 is pressed (while the "look right" key 132 in not pressed), the period $T_2$ of the stroboscope light is a little bit shorter than the rotational period $T_1$ of the disc : the disc is lit $\Phi.T_1^2/(2\pi)$ seconds before having its position where it was lit at the preceding rotation. As explained above, the disc will thus apparently rotate at a speed of $\Phi$ rad/s, but this time opposite the actual rotation direction of the disc : the disc will look as if it were turning clockwise.

When the "look right" key 132 alone is pressed, the disc is lit a little later every rotation : it looks as if it were turning slowly in the actual rotation direction of the disc (*i.e.* anticlockwise seen from the top), as explained in relation with the first embodiment.

This solution allows the user to choose which part of the disc surface he wants to see beneath the window 108. For instance, this can be convenient to read titles of songs written on a given part of the disc label. By releasing the "look right" or "look left" key, the user gets a still image of the disc surface.

According to another possible embodiment, the value of $T_2$ can be changed automatically (and not depending on controls from the user any more): $T_2$ could repeatedly be equal to $T_1 + \Phi.T_1^2/(2\pi)$ during 1 second and equal to $T_1$ during 10 seconds. The disc would then look as if it were turning of an angle $\Phi$ (during 1 second) every 11 seconds (it would look as still during the remaining 10 seconds).

Preferably, the deck 16, 116 shows no mechanism beneath the window 8, 108 to keep an aesthetic looking when no disc is loaded in the player 2, 102.

According to a possible variation, the window 8, 108 covers substantially the whole surface of the disc 10. In this case, the invention allows to view the disc surface in a reading position (at least from time to time in the first embodiment) which was not for sure in the prior art where the disc label could be (and stayed) upside down.

For this invention, a disc recorder is considered as a kind of disc player in the sense of an apparatus which can use a disc.

## Claims

1. Disc player (2 ; 102) comprising :

   - means (24) for rotating a disc (10 ; 110) with a first instantaneous period ;
   - a stroboscope light source (14 ; 114) able to illuminate at least partly a surface of the disc (10 ; 110) with a second instantaneous period,

     **characterised by**

   - means (130, 132, 134) allowing the second instantaneous period to be different from an integer times the first instantaneous period.

2. Disc player according to claim 1, wherein the stroboscope light source (114) is fixed on a pressure arm (12 ; 112).

3. Disc player according to claim 2, wherein the pressure arm (12) defines at least a reflection shape (26) in front of said stroboscope light source (14).

4. Disc player according to any of the preceding claims, wherein the difference between the second instantaneous period and an integer times the first instantaneous period is proportional to the square of the first instantaneous period.

5. Disc player according to any of claims 1 to 3, wherein the second instantaneous period is constantly different from an integer times the first instantaneous period.

6. Disc player according to any of claims 1 to 3, wherein the second instantaneous period is different from an integer times the first instantaneous period when a control key (130, 132) is pressed.

7. Disc player according to any of claims 1 to 3, wherein the second instantaneous period is periodically different from an integer times the first instantaneous period for a given lapse of time.

8. Disc player according to any of the preceding claims, wherein a transparent window (8 ; 108) covers only a part of a cover (4 ; 104) of the disc player.

**FIG.1**

**FIG.2**

FIG.3

FIG.4

**European Patent Office**

## EUROPEAN SEARCH REPORT

Application Number

EP 00 40 3061

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 008, no. 141 (P-283), 30 June 1984 (1984-06-30) -& JP 59 040349 A (HITACHI SEISAKUSHO KK), 6 March 1984 (1984-03-06) * abstract; figures 1-9 * | 1,3-8 | G11B33/10 G11B23/40 G11B17/04 |
| X A | DE 33 30 229 A (ALPS ELECTRIC CO LTD) 12 January 1984 (1984-01-12) * abstract; figures 1-3,6 * * page 3, line 20 - page 4, line 26 * * page 8, line 1 - line 10 * * page 9, line 1 - page 10, line 14 * | 1 4-7 | |
| A | EP 0 159 090 A (PHILIPS NV) 23 October 1985 (1985-10-23) * abstract; figures 1,2 * * page 2, line 8 - page 3, line 6 * | 1-8 | |
| A | PATENT ABSTRACTS OF JAPAN vol. 011, no. 287 (P-617), 17 September 1987 (1987-09-17) & JP 62 082589 A (MATSUSHITA ELECTRIC IND CO LTD), 16 April 1987 (1987-04-16) * abstract * | 1-8 | TECHNICAL FIELDS SEARCHED (Int.Cl.7) G11B |
| A | PATENT ABSTRACTS OF JAPAN vol. 008, no. 109 (P-275), 22 May 1984 (1984-05-22) -& JP 59 019283 A (AKAI DENKI KK), 31 January 1984 (1984-01-31) * abstract * | 1-8 | |

-/--

The present search report has been drawn up for all claims

| Place of search | Date of completion of the search | Examiner |
|---|---|---|
| THE HAGUE | 5 March 2001 | Pariset, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

European Patent Office

Application Number

EP 00 40 3061

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 015, no. 144 (P-1189), 11 April 1991 (1991-04-11) -& JP 03 019186 A (SANYO ELECTRIC CO LTD), 28 January 1991 (1991-01-28) * abstract * | 1-8 | |
| D,A | US 4 706 237 A (NAKAYAMA MITSUHISA) 10 November 1987 (1987-11-10) * the whole document * | 1-8 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 5 March 2001 | Pariset, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 40 3061

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2001

| Patent document cited in search report | | Publication date | Patent family member(s) | | Publication date |
|---|---|---|---|---|---|
| JP 59040349 | A | 06-03-1984 | NONE | | |
| DE 3330229 | A | 12-01-1984 | JP | 1462790 C | 28-10-1988 |
| | | | JP | 59110072 A | 25-06-1984 |
| | | | JP | 63010508 B | 07-03-1988 |
| EP 0159090 | A | 23-10-1985 | NONE | | |
| JP 62082589 | A | 16-04-1987 | JP | 1996108 C | 08-12-1995 |
| | | | JP | 7027714 B | 29-03-1995 |
| JP 59019283 | A | 31-01-1984 | NONE | | |
| JP 03019186 | A | 28-01-1991 | JP | 2730980 B | 25-03-1998 |
| US 4706237 | A | 10-11-1987 | JP | 61110364 A | 28-05-1986 |
| | | | DE | 3568508 D | 06-04-1989 |
| | | | EP | 0177107 A | 09-04-1986 |

EPO FORM P0459

For more details about this annex : see Official Journal of the European Patent Office, No. 12/82